# EUROPÄISCHE PATENTANMELDUNG

(11) **EP 2 055 193 A1**
(43) Veröffentlichungstag der Anmeldung: **06.05.2009**
(21) Anmeldenummer: 07119743.8
(22) Anmeldetag: 31.10.2007
(51) Int. Cl.: A23C 9/133, A23C 9/137, A23C 9/154, A23C 21/08

(54) **2 Phasen bildendes Getränk**

(71) Anmelder: Döhler GmbH, 64295 Darmstadt (DE)
(72) Erfinder: Schenk, Janine, 64521 Gross-Gerau (DE); Heckemanns, Günter, 64295 Darmstadt (DE); Hechler, Thomas, 64295 Darmstadt (DE)
(74) Vertreter: Schreiber, Christoph

(57) **Zusammenfassung**

Verfahren zur Herstellung eines zwei Phasen bildendes Getränkes umfassend die Schritte
- Vermischen von Milch oder Milcherzeugnissen mit einem Fettgehalt von 0,1 bis 1 Gew.-% mit Wasser, einem Verdickungsmittel und Zucker
- Zugabe eines Fruchtgrundstoffes,
wobei das Getränk einen pH-Wert im Bereich von 3,6 bis 4,0 aufweist und sich innerhalb von 24 Stunden bei 6 °C in zwei Phasen auftrennt.

## Beschreibung

Die vorliegende Erfindung betrifft ein Verfahren zur Herstellung eines Getränkes und das Getränk.

Getränke, die Mischungen von Milch, Milcherzeugnissen und Fruchtbestandteilen enthalten, sind vielfältig bekannt. Es besteht jedoch ein Bedarf an Variationen von Getränken, die die Aufmerksamkeit der Verbraucher auf sich ziehen.

Aufgabe der vorliegenden Erfindung war es, ein Verfahren bereitzustellen, mit dem neuartige Getränke erhalten werden können.

Überraschenderweise kann die Aufgabe gelöst werden durch ein Verfahren zur Herstellung eines zweiphasigen Getränkes umfassend die Schritte
- Vermischen von Milch oder Milcherzeugnissen mit einem Fettgehalt von 0,1 bis 1 Gew.-% mit Wasser, einem Verdickungsmittel und Zucker sowie gegebenenfalls Säuerungsmittel, Säureregulator
- Zugabe eines Fruchtgrundstoffs enthaltend Frucht sowie gegebenenfalls Hydrokolloide, Säuerungsmittel bzw. Säureregulatoren, Aroma, Farbstoffe,
wobei das Getränk einen pH-Wert im Bereich von 3,6 bis 4,0 aufweist und sich innerhalb von 24 Stunden bei 6 °C in zwei Phasen auftrennt.

Erfindungsgemäß werden Milch oder Milcherzeugnisse mit einem relativ geringen Fettgehalt im Bereich von 0,1 bis 1 Gew.-% mit Wasser vermischt. Im Gesamtgetränk liegt der Milchanteil bevorzugt im Bereich von 20 bis 40 Gew.-%. Als Verdickungsmittel eignen sich beispielsweise Pektine, Kappacarrageene, Carboxymethylcellulose, Gelatine, Guarkernmehl, Carrageene, Stärke, Mischungen und weitere dem Fachmann bekannte Substanzen. Die eingesetzten Verdickungsmittel liegen bezogen auf das Endgetränk in einer Menge von 0,4 bis 0,8 Gew.-% vor.

Ein geeigneter Gehalt an Verdickungsmitteln im Endgetränk liegt sich 0,4 und 0,8 Gew.-%, geeignete Viskositäten zwischen etwa 10 und etwa 40 mPas (gemessen bei 20°C mit einer Scherrate 10 bis 100 l/s nach ISO 3219).

Die Menge an Zucker, die verwendet wird, liegt bevorzugt in einem Bereich von 3 bis 15% bezogen auf das Endgetränk. Als Zucker werden Saccharose, Fruchtsüße, Fructose, Dextrose oder Mischungen davon bevorzugt.

Im nächsten Schritt wird ein Fruchtgrundstoff hinzugegeben, der neben Frucht auch Zucker, Hydrokolloide, Säuerungsmittel bzw. Säureregulatoren, Farbstoffe und Aromastoffe enthalten kann.

Für die Herstellung des Fruchtgrundstoffes sind alle im Markt erhältlichen Fruchtrohstoffe geeignet. Der Fruchtgrundstoff kann 5 bis 100 Gew. % Fruchtanteil aufweisen. Der Fruchtgrundstoff liegt bezogen auf das Endgetränk in einer Menge von 5 bis 40 Gew.-% vor.. Das Getränk weist einen pH-Wert im Bereich von 3,6 bis 4,0 auf (gegebenenfalls nach Einstellung mit Säuren und Säureregulatoren) und trennt sich innerhalb weniger Stunden bei 6 bis 25°C in zwei Phasen auf.

Damit die Phasentrennung für den Konsumenten sichtbar wird, empfiehlt es sich einen Farbstoff zuzugeben, der sich unterschiedlich in den beiden Phasen löst und damit die Phasengrenze hervorhebt. Geeignete Farbstoffe sind beispielsweise Beta-Carotin (E160), färbende Frucht- und Pflanzenextrakte und Mischungen davon. Zusätzlich können weitere Hilfsstoffe verwendet werden, wie Säuerungsmittel bzw. Säureregulatoren, Aromen, Farbstoffe, Zucker und Wasser.

Gegenstand der Erfindung ist auch ein zweiphasiges Getränk erhältlich durch das erfindungsgemäße Verfahren. Das erfindungsgemäße Getränk zeigt bei Lagerungsbedingungen in der Kühltheke (etwa 6 bis 8°C) und unter Raumbedingungen (etwa 20 bis 25°C) eine Trennung, die innerhalb von 6 bis 24 Stunden abgeschlossen ist.

Vermischen und Trennen sind reversibel, d.h. nach einem Schütteln trennt sich die Mischung wieder in zwei Phasen.

Die Erfindung wird durch die nachfolgenden Beispiele näher erläutert.

### Messverfahren

### Durchgeführte Untersuchungen mittels Rheometer

Die rheologischen Untersuchungen werden mittels Rheometer CVO 120HR NF der Firma Bohlin Instruments durchgeführt.

Zur Messung der unterschiedlichen Proben wurde ein koaxiales Zylindersystem, das aus einem Außen- und Innenzylinder besteht, verwendet. Im Rahmen der durchgeführten Bestimmungen wurde ein Innenzylinder mit dem Durchmesser 25 mm, auch C25 genannt, eingesetzt. Dieses Meßsystem ermöglicht die Messung von hochviskosen als auch von niedrigviskosen Proben, wie z.B. von Fertiggetränken. Außerdem werden die Messproben durch die große Berührungsfläche des Außenzylinders ideal temperiert.

### Aufbau des Rheometer

Das Rheometer der Firma Bohlin Instruments ist ein schubspannungsgesteuertes Messgerät, das über eine Druckluftlagerung mit kleinen Reibungswiderständen verfügt. Die Temperatureinheit kann durch ein Ölbad von Bohlin Instrument KTB 30 zwischen Temperaturen von -50°C und -105°C geregelt werden.

### Viskosität

Zur Bestimmung der Viskosität wurde das Rotationsprinzip nach Searle verwendet. Hierbei rotiert der Messkörper während der Messung und der Messbecher steht still, deshalb spricht man bei dieser Bestimmung auch von Rotationviskosimetrie.

Da das Bohlin-Rheometer ein schubspannungsgesteuertes Messgerät ist, wird das Drehmoment aufgebracht und die resultierende Auslenkung gemessen.

Drehmoment und Auslenkung werden mit Hilfe der Meßsystemkonstanten, die durch die Verwendung des koaxialen Zylindermeßsystem nach ISO 3219 vorgegeben sind, in rheologischen Daten umgewandelt.

### Beispiel 1 - mit Milch

35,3 Teile Milch mit einem Fettgehalt von 0,3% wurde mit 42,1 Gewichtsteilen Wasser vermischt. 0,6 Gewichtsteile Pektin wurden mit 7 Gewichtsteilen Zucker (Saccharose) vermischt und in die Milchwassermischung eingearbeitet. Anschließend wurde der pH-Wert mit Milchsäure auf 3,95 eingestellt.

Die erhaltene Mischung wurde auf 87°C erhitzt und in einem Heißhalter für 30 sec. bewahrt. Anschließend erfolgte eine Homogenisierung bei 150/30 Bar und eine Abkühlung auf eine Temperatur von etwa 12°C.

Zu dieser Mischung wurde ein Orangengrundstoff (15 Gewichtsteile) kaltaseptisch zudosiert und das Produkt in PET-Flaschen abgefüllt.

Das Produkt zeigte nach 6 Stunden eine deutliche Trennung in eine untere farbige Phase und eine obere milchig/weiße Phase.

Die Trennung konnte durch Zusatz von Betakarotin besser sichtbar gemacht werden.

### Beispiel 2 - mit Magermilchpulver

3,18% Magermilchpulver (Faktor: 11,11) mit einem Fettgehalt von 0,3% wurde mit 74,22% Wasser vermischt. 0,6% Pektin wurden mit 7% Zucker (Saccharose) vermischt und in die Milchwassermischung eingearbeitet. Anschließend wurde der pH-Wert mit Milchsäure auf 3,95 eingestellt. Die erhaltene Mischung wurde auf 87°C erhitzt und in einem Heißhalter für 30 sec. bewahrt. Anschließend erfolgte eine Homogenisierung bei 150/30 bar und eine Abkühlung auf eine Temperatur von etwa 12°C. Zu dieser Mischung wurde ein Orangengrundstoff mit 15% kaltaseptisch zudosiert und das Produkt in PET-Flaschen abgefüllt. Das Produkt zeigte nach 6 Stunden eine deutliche Trennung in eine untere farbige Phase und eine obere milchig/weiße Farbe.

### Beispiel 3 - mit Süßmolkenkonzentrat

2,89% Süßmolkenkonzentrat (Faktor: 12,2) mit einem Fettgehalt kleiner 0,1% wurde mit 74,51% Wasser vermischt. 0,6% Pektin wurden mit 7% Zucker (Saccharose) vermischt und in die Molkenwassermischung eingearbeitet. Anschließend wurde der pH-Wert mit Milchsäure auf 3,95 eingestellt. Die erhaltene Mischung wurde auf 87°C erhitzt und in einem Heißhalter für 30 sec bewahrt. Anschließend erfolgte eine Homogenisierung bei 150/30 bar und eine Abkühlung auf eine Temperatur von etwa 12°C. Zu dieser Mischung wurde ein Orangengrundstoff mit 15% kaltaseptisch zudosiert und das Produkt in PET-Flaschen abgefüllt. Das Produkt zeigte nach 6 Stunden eine deutliche Trennung in eine untere farbige Phase und eine obere gelbliche/klare Farbe.

### Beispiel 4 - mit Joghurt

35,3% Joghurt mit einem Fettgehalt von 0,1% wurde mit 42,1% Wasser vermischt. 0,6% Pektin wurden mit 7% Zucker (Saccharose) vermischt und in die Joghurtwassermischung eingearbeitet. Anschließend wurde der pH-Wert mit Milchsäure auf 3,95 eingestellt. Die erhaltene Mischung wurde auf 87°C erhitzt und in einem Heißhalter für 30 sec. bewahrt. Anschließend erfolgte eine Homogenisierung bei 150/30 bar und eine Abkühlung auf eine Temperatur von etwa 12°C. Zu dieser Mischung wurde ein Orangengrundstoff mit 15% kaltaseptisch zudosiert und das Produkt in PET-Flaschen abgefüllt. Das Produkt zeigte nach 6 Stunden eine deutliche Trennung in eine untere farbige Phase und eine obere milchig/weiße Farbe.

## Patentansprüche

1. Verfahren zur Herstellung eines zwei Phasen bildendes Getränkes umfassend die Schritte
- Vermischen von Milch oder Milcherzeugnissen mit einem Fettgehalt von 0,1 bis 1 Gew.-% mit Wasser, einem Verdickungsmittel und Zucker
- Zugabe eines Fruchtgrundstoffes ,
wobei das Getränk einen pH-Wert im Bereich von 3,6 bis 4,0 aufweist und sich innerhalb von 24 Stunden bei 6 °C in zwei Phasen auftrennt.

2. Verfahren nach Anspruch 1, **dadurch gekennzeichnet, dass** das Verdickungsmittel ausgewählt ist aus Pektine, Kappacarrageen, Carboxymethylcellulose, Gelatine, Guarkernmehl, Carrageene, Stärke und Mischungen davon.

3. Verfahren nach Anspruch 1 oder 2, **dadurch gekennzeichnet, dass** der Milchanteil im Getränk zwischen 20 und 40 Gew.-% liegt.

4. Verfahren nach mindestens einem der Ansprüche 1 bis 3, **dadurch gekennzeichnet, dass** der Gehalt an Verdickungsmitteln im Getränk zwischen 0,4 und 0,8 Gew.-% liegt.

5. Verfahren nach mindestens einem der Ansprüche 1 bis 4, **dadurch gekennzeichnet, dass** zusätzlich weitere Hilfsstoffe wie Säuerungsmittel bzw. Säureregulatoren, Aromen, Farbstoffe, Zucker und Wasser zugegeben werden oder im Fruchtgrundstoff enthalten sind.

6. Verfahren nach mindestens einem der Ansprüche 1 bis 5, **dadurch gekennzeichnet, dass** der Farbstoff ausgewählt ist aus Beta-Carotin (E160), färbenden Frucht- und Pflanzenextrakten und Mischungen davon.

7. Zweiphasen bildendes Getränk erhältlich durch ein Verfahren nach mindestens einem der Ansprüche 1 bis 6.
